(19) Europäisches Patentamt / European Patent Office / Office européen des brevets

(11) **EP 4 434 710 A1**

(12) **EUROPEAN PATENT APPLICATION**
published in accordance with Art. 153(4) EPC


(43) Date of publication:
**25.09.2024 Bulletin 2024/39**

(21) Application number: **22895216.4**

(22) Date of filing: **14.09.2022**

(51) International Patent Classification (IPC):
***B29B 9/06*** $^{(2006.01)}$ ***B29B 9/12*** $^{(2006.01)}$
***C08J 3/12*** $^{(2006.01)}$ ***C08L 27/18*** $^{(2006.01)}$
***C08L 51/04*** $^{(2006.01)}$ ***C08L 69/00*** $^{(2006.01)}$
***B29B 7/48*** $^{(2006.01)}$ ***B29C 48/40*** $^{(2019.01)}$
***B29C 48/505*** $^{(2019.01)}$

(52) Cooperative Patent Classification (CPC):
**B29B 7/48; B29B 9/06; B29B 9/12; B29C 48/40; B29C 48/505; C08J 3/12; C08L 27/18; C08L 51/04; C08L 69/00**

(86) International application number:
**PCT/JP2022/034299**

(87) International publication number:
**WO 2023/089929 (25.05.2023 Gazette 2023/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.11.2021 JP 2021186276**



(71) Applicants:
- **Mitsubishi Engineering-Plastics Corporation**
  **Tokyo 105-0021 (JP)**
- **Mitsubishi Chemical Corporation**
  **Chiyoda-ku**
  **Tokyo 100-8251 (JP)**

(72) Inventor: **TAJIRI, Toshiyuki**
**Hiratsuka-shi, Kanagawa 254-0016 (JP)**

(74) Representative: **Müller-Boré & Partner**
**Patentanwälte PartG mbB**
**Friedenheimer Brücke 21**
**80639 München (DE)**


(54) **METHOD FOR PRODUCING FLAME RETARDANT POLYCARBONATE RESIN COMPOSITION PELLETS**


(57) A method for producing flame retardant polycarbonate resin composition pellets using a twin screw extruder, wherein,
from 30 to 85 mass% of resin pellets (A) in which a polycarbonate resin having 2.7 to 3.4 of Mw/Mn at more than 40 mass% in the pellets (A); not less than 5 mass% and less than 25 mass% of phosphorus flame retardant (B); 0.1 to 1.0 mass% of polytetrafluoroethylene (C); 0 to 50 mass% of polycarbonate resin flake (D); 0 to 30 mass% of styrenic copolymer resin (E); and 0 to 15 mass% of another additive (F) other than the (B) and (C) are kneaded by the twin screw extruder in a kneading section with a screw configuration consisting of two or more selected from R kneading disc, N kneading disc, L kneading disc, L screw, sealing ring, mixing screw and rotor screw, at a screw rotation speed of 370 to 830 rpm, with the torque density applied to a screw shaft being 6.0 to 16.0 Nm/cm$^3$, and are extruded as a strand from the extruder and then cut.


[Fig. 1]

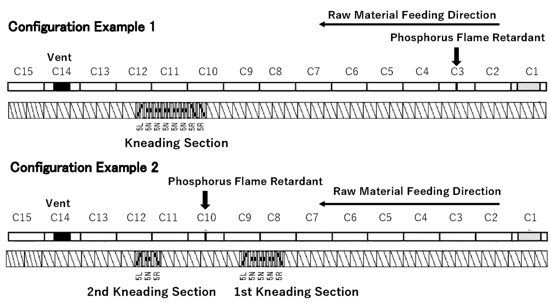


EP 4 434 710 A1

## Description

[Technical Field]

The present invention relates to a method for producing flame retardant polycarbonate resin composition pellets.

[Background Art]

Polycarbonate resin exhibits excellent heat resistance and mechanical properties, and is therefore widely used in, for example, materials for producing components of electrical equipment, electronic devices, vehicles such as automobiles, office automation equipment such as printers and copiers, houses, buildings and other industrial fields. These products require flame retardancy from a safety perspective in order to prevent fire caused by high temperatures, and flame retardant polycarbonate resin composition, in particular, is advantageously used in office automation equipment such as printers and copiers, personal computers, a variety of mobile terminals, housings for batteries, and the like.

In recent years, however, environmental awareness has increased and there have been increased social demands for reuse of resins, and restrictions have been strengthened by a variety of legal systems. In addition, there are requirements for use of recycled resins, in particular, in, for example, exterior materials and housings of office automation equipment and electronic equipment, and there are now many cases where polycarbonate resin compositions containing a prescribed amount of recycled resin are required.

In order to regenerate thermoplastic plastics from used products, thermoplastic plastic members are recovered from components of equipment, pulverized, and washed with a washing liquid, and pulverized thermoplastic plastic is separated from the pulverized mixture, as disclosed in PTL 1 for example.

Examples of raw materials for recycled polycarbonate resin (recycled product) include optical disc, such as CD and DVD, light guide plate, transparent motor vehicle component, such as vehicle window, headlamp lense and windscreen, container such as water bottle, eyeglass lense, and construction material, such as noise barrier, window and corrugated sheet, and these are reused as pellets obtained by pulverizing, washing, separating and recovering. In addition, by-products, such as sprues and runners formed during molding, can also be repelleted and used.

Such recycled products require high flame retardancy in order to be used in, for instance, office automation equipment, in particular.

Methods comprising blending halogen-containing flame retardants, such as organic bromine compound, have been well known as methods for imparting polycarbonate resin with flame retardancy, but there have been proposals in recent years to blend halogen-containing flame retardants and phosphorus flame retardants in polycarbonate resin, and phosphorus flame retardants are most commonly used at present.

[Citation List]

[Patent Literature]

[PTL 1] JP 2000-198116 A

[Summary of Invention]

[Technical Problem]

Phosphorus flame retardant, and especially phosphate ester flame retardant, have a low melting temperature and, when these are melt kneaded with polycarbonate resin pellets or polycarbonate resin-containing resin pellets, the phosphorus flame retardant and the pellets are unlikely to mix, and unmolten products tend to occur in the polycarbonate resin pellets or polycarbonate resin-containing resin pellets. This is because the molten phosphorus flame retardant acts as a lubricant and weakens forces such as shear forces applied to the pellets from an extruder. As a result, vent blocking can occur at a vent opening, the discharged amount of resin may not increase, strand take-up may not be possible, or the flame retardancy of obtained polycarbonate resin composition pellets may be insufficient, hence impact strength may decrease due to retained heat at the time of molding.

The purpose of (problem to be addressed by) the present invention is provide a method for producing flame retardant polycarbonate resin pellets able to solve the problems mentioned above.

[Solution to Problem]

As a result of diligent research carried out in order to solve the problems mentioned above, the inventor of the

present invention has found that when a phosphorus flame retardant and polytetrafluoroethylene are fed to resin pellets containing a polycarbonate resin having a molecular weight distribution that falls within a specific range in a twin screw extruder and these are kneaded in a kneading section, unmolten products and vent blocking are not generated, favorable productivity can be stably achieved at a high discharge rate, and it is possible to produce excellent polycarbonate resin composition pellets which exhibit uniform and excellent flame retardancy and which are unlikely to undergo a decrease in impact strength even even when if the molten resin retains for a long time during molding, and thereby completed the present invention.

The present invention relates to the following method for producing flame retardant polycarbonate resin composition pellets.

1. A method for producing flame retardant polycarbonate resin composition pellets using a twin screw extruder, wherein, from 30 to 85 mass% of resin pellets (A) in which a polycarbonate resin having a Mw/Mn ratio of 2.7 to 3.4 is contained at a quantity of more than 40 mass% in the pellets (A); not less than 5 mass% and less than 25 mass% of a phosphorus flame retardant (B); 0.1 to 1.0 mass% of a polytetrafluoroethylene (C); 0 to 50 mass% of a polycarbonate resin flake (D); 0 to 30 mass% of a styrenic copolymer resin (E); and 0 to 15 mass% of another additive (F) other than the (B) and (C) [where a total amount of (A) to (F) is 100 mass] are kneaded by the twin screw extruder in a kneading section with a screw configuration consisting of two or more selected from R kneading disc, N kneading disc, L kneading disc, L screw, sealing ring, mixing screw and rotor screw, at a screw rotation speed of 370 to 830 rpm, with the torque density applied to a screw shaft being 6.0 to 16.0 $Nm/cm^3$,
and are extruded as a strand from the extruder and then cut.
2. The production method of 1 above, wherein an average weight of the resin pellets (A) is 13 to 35 mg/pellet.
3. The production method of 1 or 2 above, wherein a length of the kneading section in the screw configuration is not less than 5 D and not more than 13 D (D is a barrel diameter).
4. The production method of any of 1 to 3 above, wherein the resin pellets (A) are recycled resin pellets.
5. The production method of any of 1 to 4 above, wherein the phosphorus flame retardant (B) is a condensed phosphate ester compound.
6. The production method of any of 1 to 5 above, wherein the phosphorus flame retardant (B) is a condensed phosphate ester compound that is a liquid at room temperature.
7. The production method of any of 1 to 6 above, wherein the styrenic copolymer resin (E) is an ABS resin.

[Advantageous Effects of Invention]

According to the production method of the present invention, good productivity can be stably achieved at a high discharge rate, and it is possible to produce polycarbonate resin composition pellets, which exhibit uniform and excellent flame retardancy and which are unlikely to undergo a decrease in impact strength even when the molten resin retains for a long time during molding is caused, by kneading a polycarbonate resin having a broad molecular weight distribution in which the Mw/Mn ratio is 2.7 to 3.4 using screws having a specific configuration at a screw rotation speed of 370 to 830 rpm and a torque density applied to a screw shaft of 6.0 to 16.0 $Nm/cm^3$.

The viscosity of the polycarbonate resin having a broad molecular weight distribution in which the Mw/Mn ratio is 2.7 to 3.4 tends to increase in a low shear rate region. This is thought to be because intertwinement of chains of a polycarbonate polymer that is a high molecular weight component is unlikely to be undone and stress relaxation does not progress, which means that dripping at the time of burning is suppressed and flame retardancy is improved. In addition, by setting the rotational speed and torque density to be the values mentioned above, high flame retardancy and impact strength of molded article by retention molding can be achieved.

In addition, in a case where a polycarbonate resin having the broad molecular weight distribution mentioned above is to be produced, it is necessary to apply a thermal history to the polycarbonate resin or melt knead a high molecular weight polycarbonate and a low molecular weight polycarbonate, but in a case where a high molecular weight polycarbonate and a low molecular weight polycarbonate are kneaded, there is a significant difference in terms of viscosity between these polycarbonates, strong kneading is required in order to achieve uniform melt kneading, and the temperature during kneading tends to increase. As a result, the high molecular weight polycarbonate tends to be damaged. It is thought that retention molding Charpy impact strength tends to decrease as a result of this, but according to the method of the present invention, it is possible to achieve a high level of retention molding Charpy impact strength.

[Brief Description of Drawings]

[Fig. 1]
A horizontal cross-sectional view showing an example of a screw configuration of a twin screw extruder used in the

method of the present invention.

[Description of Embodiments]

The present invention will now be explained in detail through the use of embodiments and examples, but it should be understood that the present invention is not limited to these embodiments and examples.

Raw materials used in the method for producing flame retardant polycarbonate resin composition pellets of the present invention are 30 to 85 mass% of resin pellets (A) in which a polycarbonate resin having a Mw/Mn ratio of 2.7 to 3.4 is contained at a quantity of more than 40 mass% in the pellets, not less than 5 mass% and less than 25 mass% of a phosphorus flame retardant (B), 0.1 to 1.0 mass% of a polytetrafluoroethylene (C), 0 to 50 mass% of a polycarbonate resin flake (D), 0 to 30 mass% of a styrenic copolymer resin (E), and 0 to 15 mass% of another additive (F) other than components (B) and (C), each relative to a total of 100 mass% of the total amount of components (A) to (F).

The styrenic copolymer resin is a synthetic resin obtained by copolymerizing a styrene monomer and another monomer such as acrylonitrile or butadiene in order to improve the properties of polystyrene. Typical examples thereof include copolymer resin of styrene monomer and acrylonitrile (AS resin), copolymer resin of styrene monomer, butadiene and acrylonitrile (ABS resin), copolymer of styrene monomer, ethylene and acrylonitrile (AES resin), and ASA resin (acrylonitrile-styrene-acrylic acid esters). Of these, ABS resin, which have high impact resistance, is preferably used.

[Resin pellets (A)]

Resin pellets (A) containing more than 40 mass% of a polycarbonate resin having an Mw/Mn ratio of 2.7 to 3.4 in the pellets are used in the method for producing polycarbonate resin composition pellets of the present invention.

The resin pellets (A) should contain more than 40 mass% of a polycarbonate resin having an Mw/Mn ratio of 2.7 to 3.4, and a mixture or alloy containing another resin other than a polycarbonate resin can be advantageously used. The resin pellets (A) containing more than 40 mass% of a polycarbonate resin having an Mw/Mn ratio of 2.7 to 3.4 may be resin pellets comprising a polycarbonate resin having the molecular weight distribution mentioned above and, for example, an incompatible resin and an additive, and more than 40 mass% of a polycarbonate resin having an Mw/Mn ratio of 2.7 to 3.4 is contained in resin pellets comprising a polycarbonate resin and, more preferably, also comprising ABS resin, AS resin, polystyrene resin, polyolefin resin, elastomer that is incompatible with the polycarbonate resin, a filler, and the like. The amount of the polycarbonate resin having Mw/Mn ratio of 2.7 to 3.4 is preferably more than 50 mass%, more preferably more than 60 mass%, such as more than 70 mass%, more than 80 mass% or more than 85 mass%, and is further preferably more than 90 mass%, and particularly preferably more than 95 mass%. Of course, the resin pellets may be a polycarbonate resin per se (that is, 100 mass% of a polycarbonate resin).

The Mw/Mn ratio of the resin pellets (A) can be determined in terms of polystyrene by means of GPC. Specific details of this measurement method are as described in the working examples section.

The Mw/Mn ratio of the resin pellets (A) is preferably 2.7 or more, and more preferably 2.8 or more, and is preferably 3.4 or less, and more preferably 3.3 or less.

Moreover, the pellets mentioned here are products that are first melted and then uniformly formed into a particulate shape. A preferred average weight of the resin pellets (A) is 10 to 40 mg/pellet, preferably 13 to 35 mg/pellet, and more preferably 15 to 30 mg/pellet. If the average weight is less than 10 mg/pellet, the pellets melt quickly in the extruder, the resin temperature tends to increase, the polycarbonate resin and polytetrafluoroethylene are damaged, flame retardancy can decrease, and impact strength of molded article obtained by retention molding can decrease. In addition, if the average weight exceeds 40 mg/pellet, the pellets do not sufficiently melt, and vent blocking and strand breakage readily occur. In addition, a decrease in physical properties can occur due to insufficient dispersion of a flame retardant or impact resistance modifier. The average weight of the pellets is a value determined by measuring the weights of 50 arbitrarily selected pellets and calculating the average weight per pellet.

The resin pellets (A) may be unused so-called virgin pellets, but may also be recycled material pellets or include recycled material pellets. Preferred examples of raw materials of recycled material pellets include optical disc, such as CD and DVD, light guide plate, transparent motor vehicle component, such as vehicle window, headlamp lens and windscreen, container such as water bottle, eyeglass lens, and construction material such as noise barrier, window and corrugated sheet. It is also possible to use pulverized products obtained from defective product, sprue and runner formed during molding, and repelletised products obtained by pulverizing, washing, separating and recovering these. Hereinafter, these recycled materials, regenerated products and repelletised products are collectively referred to as recycled resin and recycled resin pellet.

Use of pellets of recycled resin is particularly preferred in the method for producing a polycarbonate resin composition pellet of the present invention. Use of pellets of recycled resin is preferred from the perspective of lowering LCA (life cycle assessment).

Recycled resin often contains resin other than polycarbonate resin and a variety of additive, but pellets containing

more than 40 mass% of the polycarbonate resin can be used as the resin pellets (A). Recycled resin pellets of polycarbonate resin can be purchased from recycled material manufacturers.

[Polycarbonate resin]

Examples of the polycarbonate resin include aromatic polycarbonate resin, aliphatic polycarbonate resin and aromatic-aliphatic polycarbonate resin, but aromatic polycarbonate resin are preferred, and more specifically, it is possible to use an aromatic polycarbonate polymer or copolymer obtained by reacting an aromatic dihydroxy compound with phosgene or a carbonic acid diester.

Examples of the aromatic dihydroxy compound include 2,2-bis(4-hydroxyphenyl)propane (that is, bisphenol A), 2,2-bis(3-methyl-4-hydroxyphenyl)propane (that is, bisphenol C), tetramethylbisphenol A, $\alpha,\alpha'$-bis(4-hydroxyphenyl)-p-diisopropylbenzene, hydroquinone, resorcinol and 4,4'-dihydroxydiphenyl.

Preferred examples of polycarbonate resin include polycarbonate resin obtained using bisphenol A or a combination of bisphenol A and another aromatic dihydroxy compound as dihydroxy compounds and polycarbonate resin obtained using bisphenol C or a combination of bisphenol C and another aromatic dihydroxy compound (especially bisphenol A).

The polycarbonate resin may be a homopolymer comprising one type of repeating unit or a copolymer having two or more types of repeating unit. Here, copolymer may be selected from among a variety of copolymer types, such as random copolymer and block copolymer.

The method for producing the aromatic polycarbonate resin is not particularly limited, and it is possible to use a conventional method such as the phosgene method (an interfacial polymerization method) or a melt process (a transesterification method).

The molecular weight of the polycarbonate resin is not limited, but the viscosity average molecular weight (Mv) thereof is generally approximately 10,000 to 100,000, and preferably approximately 12,000 to 35,000. By setting the viscosity average molecular weight to be no lower than the lower limit of the range mentioned above, it is possible to further improve the mechanical strength of the polycarbonate resin composition, and this viscosity average molecular weight is more preferred in cases where the resin composition is to be used in applications requiring high mechanical strength. Meanwhile, by setting the viscosity average molecular weight to be no higher than the upper limit of the range mentioned above, it is possible to better suppress a reduction in the fluidity of the polycarbonate resin composition, increase molding processing properties, and facilitate thin wall molding properties.

Moreover, it is possible to use a mixture of two or more types of polycarbonate resin having different viscosity average molecular weights, and in such cases, it is possible to mix polycarbonate resins whose viscosity average molecular weights fall outside the preferred range mentioned above.

In the present invention, the viscosity average molecular weight (Mv) of the polycarbonate resin is a value that is obtained by determining the intrinsic viscosity ([η]) by measuring the viscosity of a methylene chloride solution of the polycarbonate resin at 25°C using a Ubbelohde type viscometer, and then calculating the viscosity average molecular weight from the Schnell viscosity equation below.

$$[\eta]=1.23\times10^{-4}\ Mv^{0.83}$$

The method for producing the polycarbonate resin is not particularly limited, and it is possible to use a polycarbonate resin produced using the phosgene method (an interfacial polymerization method) or a melt process (a transesterification method). In addition, a polycarbonate resin obtained by subjecting a polycarbonate resin produced by means of a melt process to a post treatment for adjusting the amount of terminal hydroxyl groups is also preferred.

The polycarbonate resin may use not only virgin raw material, but also polycarbonate resin regenerated from used products (so-called material-recycled polycarbonate resin), and it is preferable to incorporate both virgin raw material and recycled resin, and the polycarbonate resin may comprise a recycled polycarbonate resin. In cases where a recycled polycarbonate resin is used, the proportion of the recycled polycarbonate resin in the polycarbonate resin is preferably 40% or more, 50% or more, 60% or more, or 80% or more, and may be 100%.

Preferred examples of used products include optical disc, such as CD and DVD, light guide plate, transparent motor vehicle component, such as vehicle window, headlamp lens and windscreen, container such as water bottle, eyeglass lens, and construction materials, such as noise barrier, window and corrugated sheet. In addition, recycled polycarbonate resin can be pulverized products obtained from defective article, sprue and runner at the time of molding, or pellet obtained by melting these pulverized products.

[Phosphorus flame retardant (B)]

In the present invention, the phosphorus flame retardant (B) is a compound that contains phosphorus in the molecule, and may be a low molecular weight compound, an oligomer or a polymer, but from the perspective of thermal stability, it is preferable to use, for example, a condensed phosphate ester compound represented by general formula (1) below or a phosphazene compound represented by general formula (2) or (3) .

[Compound 1]

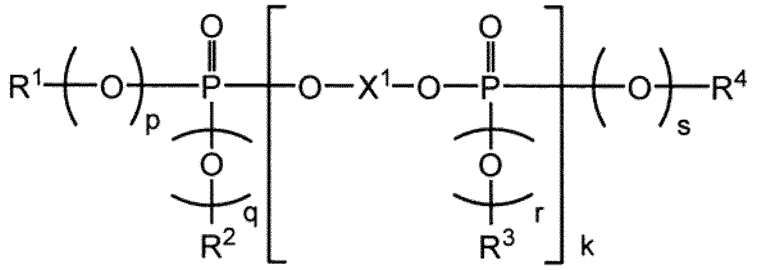

・・・(1)

[Compound 2]

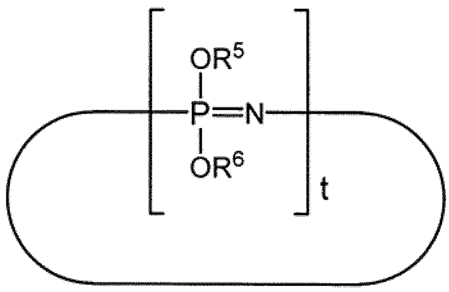

・・・(2)

[Compound 3]

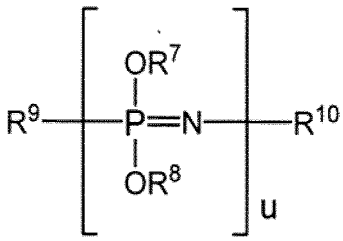

・・・(3)

<Condensed phosphate ester compound>

The condensed phosphate ester compound represented by general formula (1) may be a mixture of compounds for which the value of k differs from compound to compound, and in the case of a mixture of condensed phosphate esters for which the value of k differs from compound to compound, the value of k is taken to be the average value of k for the compounds in the mixture. k is generally an integer between 0 and 5, and in the case of a mixture of compounds for which the value of k differs from compound to compound, the average value of k is preferably 0.5 to 2, more preferably 0.6 to 1.5, further preferably 0.8 to 1.2, and particularly preferably 0.95 to 1.15.

In addition, $X^1$ denotes divalent arylene group, and is divalent group derived from, for example, dihydroxy compound such as resorcinol, hydroquinone, bisphenol A, 2,2'-dihydroxybiphenyl, 2,3'-dihydroxybiphenyl, 2,4'-dihydroxybiphenyl, 3,3'-dihydroxybiphenyl, 3,4'-dihydroxybiphenyl, 4,4'-dihydroxybiphenyl, 1,2-dihydroxynaphthalene, 1,3-dihydroxynaphthalene, 1,4-dihydroxynaphthalene, 1,5-dihydroxynaphthalene, 1,6-dihydroxynaphthalene, 1,7-dihydroxynaphthalene, 1,8-dihydroxynaphthalene, 2,3-dihydroxynaphthalene, 2,6-dihydroxynaphthalene or 2,7-dihydroxynaphthalene. Of these, a divalent group derived from resorcinol, bisphenol A or 3,3'-dihydroxybiphenyl is particularly preferred.

In addition, the values of p, q, r and s in general formula (1) are 0 or 1, with 1 being preferred.

In addition, $R^1$, $R^2$, $R^3$ and $R^4$ each denote alkyl group having 1 to 6 carbon atoms or aryl group which has 6 to 20 carbon atoms and which may be substituted with alkyl group. Examples of such aryl group include phenyl group, cresyl group, xylyl group, isopropylphenyl group, butylphenyl group, tert-butylphenyl group, di-tert-butylphenyl group and p-cumylphenyl group, but phenyl group, cresyl group and xylyl group are more preferred.

Specific examples of the condensed phosphate ester compound represented by general formula (1) include aromatic phosphate ester such as triphenyl phosphate (TPP), tricresyl phosphate (TCP), trixylenyl phosphate (TXP), cresyldiphenyl phosphate (CDP), 2-ethylhexyldiphenyl phosphate (EHDP), tert-butylphenyldiphenyl phosphate, bis-(tert-butylphenyl)phenyl phosphate, tris-(tert-butylphenyl) phosphate, isopropylphenyldiphenyl phosphate, bis-(isopropylphenyl)diphenyl phosphate and tris-(isopropylphenyl) phosphate; and condensed phosphate ester such as resorcinol bis-diphenyl phosphate (RDP), resorcinol bis-dixylenyl phosphate (RDX), bisphenol A bis-diphenyl phosphate (BDP) and biphenyl bis-diphenyl phosphate.

The acid value of the condensed phosphate ester compound represented by general formula (1) is preferably 0.2 mg KOH/g or less, more preferably 0.15 mg KOH/g or less, further preferably 0.1 mg KOH/g or less, and particularly preferably 0.05 mg KOH/g or less. The lower limit of this acid value may be essentially 0. However, the half ester content is more preferably 1.1 parts by mass or less, and further preferably 0.9 parts by mass or less. If the acid value exceeds 0.2 mg KOH/g or if the half ester content exceeds 1.5 mg, the thermal stability and hydrolysis resistance of the polycarbonate resin composition of the present invention may decrease.

In addition to the compounds mentioned above, examples of condensed phosphate ester compound also encompass 10-(2,5-dihydroxyphenyl)-10H-9-oxa-10-phosphaphenanthrene-10-oxide, 10-(2,3-dihydroxyphenyl)-10H-9-oxa-10-phosphaphenanthrene-10-oxide, 10-(2,4-dihydroxyphenyl)-10H-9-oxa-10-phosphaphenanthrene-10-oxide; and polyester resin, polycarbonate resin and epoxy resin that have a phosphate ester moiety.

<Phosphazene compound>

Examples of phosphazene compounds represented by general formulae (2) and (3) include phenoxyphosphazene, cyclic and/or linear $C_{1-6}$ alkyl $C_{6-20}$ aryloxyphosphazene compounds such as (poly)tolyloxyphosphazene (for example, o-tolyloxyphosphazene, m-tolyloxyphosphazene, p-tolyloxyphosphazene, o,m-tolyloxyphosphazene, o,p-tolyloxyphosphazene, m,p-tolyloxyphosphazene, o,m,p-tolyloxyphosphazene and the like), (poly) xylyloxyphosphazene; and cyclic and/or linear $C_{6-20}$ aryl $C_{1-10}$ alkyl $C_{6-20}$ aryloxyphosphazene compounds such as (poly)phenoxytolyloxyphosphazene (for example, phenoxy-o-tolyloxyphosphazene, phenoxy-m-tolyloxyphosphazene, phenoxy-p-tolyloxyphosphazene, phenoxy-o,m-tolyloxyphosphazene, phenoxy-o,p-tolyloxyphosphazene, phenoxy-m,p-tolyloxyphosphazene, phenoxy-o,m,p-tolyloxyphosphazene and the like), (poly)phenoxyxylyloxyphosphazene and (poly)phenoxytolyloxyxylyloxyphosphazene.

Of these, cyclic and/or linear phenoxyphosphazene compounds, cyclic and/or linear $C_{1-3}$ alkyl $C_{6-20}$ aryloxyphosphazene compounds, and cyclic and/or linear $C_{6-20}$ aryloxy $C_{1-3}$ alkyl $C_{6-20}$ aryloxyphosphazene compounds (for example, cyclic and/or linear tolyloxyphosphazene, cyclic and/or linear phenoxytolylphenoxyphosphazene, and the like) are preferred.

In cyclic phosphazene compound represented by general formula (2), $R^5$ and $R^6$ may be the same as, or different from, each other, and each denote aryl group or alkylaryl group. Examples of such aryl groups and alkylaryl groups include phenyl group, naphthyl group, methylphenyl group and benzyl group, but of these, cyclic phenoxyphosphazene compound in which $R^5$ and $R^6$ are phenyl groups is particularly preferred.

This type of cyclic phenoxyphosphazene compound is obtained by, for example, removing cyclic phosphazene compounds such as hexachlorocyclotriphosphazene, octachlorocyclotetraphosphazene and decachlorocyclopentaphosphazene from a mixture of cyclic and linear chlorophosphazenes obtained by reacting ammonium chloride with phosphorus pentachloride at a temperature of 120 to 130°C, and then substituting with phenoxy group, and examples thereof include compounds such as phenoxycyclotriphosphazene, octaphenoxycyclotetraphosphazene and decaphenoxycyclopentaphosphazene.

In addition, in formula (2), t denotes an integer between 3 and 25, but within this range, a compound in which t is an integer between 3 and 8 is preferred, and it is possible to use of a mixture of compounds having different values for t. Within this range, a mixture of compounds in which the proportion of a compound for which t is 3 is 50 mass% or more, the proportion of a compound for which t is 4 is 10 to 40 mass% and the total proportion of compounds for which t is 5 or more is 30 mass% or less is preferred.

In formula (3), $R^7$ and $R^8$ may be the same as, or different from, each other, and each denote aryl group or alkylaryl group. Examples of such aryl group and alkylaryl group include phenyl group, naphthyl group, methylphenyl

group and benzyl group, but a linear phenoxyphosphazene compound in which $R^7$ and $R^8$ are phenyl groups is particularly preferred.

Examples of this type of linear phenoxyphosphazene compound include compounds obtained by, for example, subjecting hexachlorocyclotriphosphazene, which is obtained using the method described above, to ring-opening polymerization at a temperature of 220 to 250°C, and substituting the obtained linear dichlorophosphazene, which has a degree of polymerization of 3 to 10,000, with phenoxy groups.

In addition, $R^9$ denotes at least one group selected from among $-N=P(OR^7)_3$ group, $-N=P(OR^8)_3$ group, $-N=P(O)OR^7$ group and - $N=P(O)OR^8$, and $R^{10}$ denotes at least one group selected from among $-P(OR^7)_4$ group, $-P(OR^8)_4$ group, $-P(O)(OR^7)_2$ group and - $P(O)(OR^8)_2$ group.

In addition, in formula (3), u denotes an integer between 3 and 10,000, preferably between 3 and 1000, more preferably between 3 and 100, and further preferably between 3 and 25.

In addition, the phosphazene compound may be a crosslinked phosphazene compound that is partially crosslinked. By having this type of crosslinked structure, heat resistance tends to be improved.

Examples of this type of crosslinked phosphazene compound include compounds having a crosslinked structure of a 4,4'-diphenylene group, such as compounds having a crosslinked structure of a crosslinking group represented by general formula (4) below, for example, 4,4'-sulfonyldiphenylene (a bisphenol S residue), a compound having a crosslinked structure of 2,2-(4,4'-diphenylene)isopropylidene group, compound having crosslinked structure of 4,4'-oxydiphenylene group and a compound having a crosslinked structure of 4,4'-thiodiphenylene group.

[Compound 4]

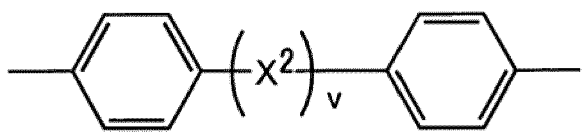

(4)

In formula (4), $X^2$ is $-C(CH_3)_2-$, $-SO_2-$, -S- or -O-, and v is 0 or 1.

Of these, a condensed phosphate ester compound is more preferred from the perspectives of high flame retardancy and high impact strength of molded article by retention molding. Condensed phosphate ester compounds include compounds that are solid at room temperature and compounds that are liquid at room temperature, but a condensed phosphate ester compound that is a liquid at room temperature is more preferred. By feeding this using a liquid addition device such as a liquid feeding pump, the condensed phosphate ester compound that is a liquid at room temperature can be uniformly added, pellets having a uniform added quantity can be obtained, there are no concerns regarding classification due to powder raw material mixing, and stable flame retardancy can be achieved.

Here, room temperature means 23°C specifically. Preferred specific examples of condensed phosphate ester compounds that are liquid at room temperature include bisphenol A bis-diphenyl phosphate. Examples of commercially available products include FP-600 produced by ADEKA and CR-741 produced by Daihachi Chemical Industry Co., Ltd.

Relative to a total of 100 mass% of components (A) to (F), the content of the phosphorus flame retardant (B) is not less than 5 mass% and less than 25 mass%, and is preferably 6 mass% or more, and more preferably 8 mass% or more, and is preferably 22 mass% or less, and more preferably 20 mass% or less.

[Polytetrafluoroethylene (C)]

The polytetrafluoroethylene (C) preferably has fibril-forming ability, and having fibril-forming ability tends to significantly improve dripping prevention properties at the time of burning. Polytetrafluoroethylene can be produced using a suspension polymerization method or an emulsion polymerization method, and polytetrafluoroethylene produced by emulsion polymerization can be present in a powdery form known as a fine powder or as a suspension liquid (a dispersion).

An organic polymer-coated polytetrafluoroethylene can also be advantageously used as the polytetrafluoroethylene (C). By using an organic polymer-coated polytetrafluoroethylene, dispersibility is improved, the surface appearance of a molded article is improved, and the occurrence of foreign matter on the surface can be suppressed. From the perspective of dispersibility when blended with a polycarbonate resin, the monomer used to produce the organic polymer that coats the polytetrafluoroethylene is preferably a monomer having high affinity for the polycarbonate resin, and is more preferably an aromatic vinyl monomer, a (meth)acrylic acid ester monomer or a vinyl cyanide monomer.

Moreover, the polytetrafluoroethylene (C) may be a single type or a combination of two or more arbitrary types thereof combined at arbitrary proportions.

The content of the polytetrafluoroethylene (C) is 0.1 to 1.0 mass% relative to a total of 100 mass% of components (A) to (F) .

[Method for producing polycarbonate resin composition pellets]

The method for producing polycarbonate resin composition pellets of the present invention comprises feeding the resin pellets (A), phosphorus flame retardant (B), polytetrafluoroethylene (C) described above, as well as other required components (D), (E) and (F), in a twin screw extruder, and kneading. During this process, kneading is carried out using a screw configuration having a kneading section consisting of two or more selected from among R kneading disc, N kneading disc, L kneading disc, L screw, sealing ring, mixing screw and rotor screw, and the components are kneaded at a screw rotation speed of 370 to 830 rpm, with the torque density applied to a screw shaft being 6.0 to 16.0 $Nm/cm^3$, extruded as a strand from the extruder and then cut to form pellets.

A twin screw extruder is used in the production method of the present invention. A variety of twin screw extruders can be used, and the screw rotation type can be co-rotating or counter-rotating, but a same direction meshing type twin screw extruder is preferred. In addition, a vent port which can be decompressed or opened to the atmosphere is preferably provided in the twin screw extruder.

Fig. 1 is a horizontal cross-sectional view showing an example of a screw configuration of an extruder used in the method of the present invention. The production method of the present invention will now be explained with reference to Fig. 1.

The resin pellets (A) or the like are fed from a feeding port at cylinder position C1, and are fed, transported and pre-heated in a feeding·transport·pre-heating section. The transporting screw is preferably constituted from ordinary flight-shaped screw elements.

The resin pellets (A) are then melted in a kneading section, but this kneading section preferably has a configuration in which the length thereof is 5.0 D to 13.0 D (D denotes the barrel diameter) and which is obtained by combining two or more of R kneading disc, N kneading disc, L kneading disc, L screw, sealing ring, mixing screw and rotor screw. Next, a strand is extruded from the extruder and cut to form pellets. If the length of the kneading section is shorter than 5.0 D, melting tends to be insufficient, and vent blocking and strand breakage tend to occur. In addition, if the length of the kneading section exceeds 13.0 D, the resin temperature readily increases, and flame retardancy and impact strength of molded article by retention molding tend to decrease. The length of the kneading section is more preferably 5.5 D to 12 D, and further preferably 6 D to 11 D. However, this kneading section may be divided into multiple sections instead of being a single section, and one or more of the resin pellets (A), the phosphorus flame retardant (B), the polytetrafluoroethylene (C), the polycarbonate resin flakes (D), the styrenic copolymer resin (E) and the additive (F) other than components (B) and (C) may be fed between divided kneading sections. Alternatively, these components may be fed at the base of the extruder, or divided into multiple portions and fed at multiple locations between kneading sections. A preferred kneading section length of 5.0 D to 13.0 D is a length at which the resin pellets (A) that are the primary component are kneaded. In a case where the kneading section is divided into multiple sections, as shown by configuration example 2 in Fig. 1, for example, a forward-feeding full flight screw is introduced between sections. The forward-feeding full flight screw is not included in the length of the kneading section.

An R kneading disc is also referred to as a forward kneading disc (hereinafter also referred to as R), and generally has 2 or more blades, with the angle of twist Θ between the blades being 10° to 75°. By disposing the blades so as to be offset at a prescribed angle in this way, the resin can be transported and a strong shearing force can be applied.

An N kneading disc is also referred to as an orthogonal kneading disc (hereinafter also referred to as N), and generally has 2 or more blades, with the angle of twist Θ between the blades being 75° to 105°. Because the blades are disposed so as to be offset by approximately 90°, there is almost no force for transporting the resin, but the kneading force is strong.

An L kneading disc is also referred to as a backward kneading disc (hereinafter also referred to as L), and generally has 2 or more blades, with the angle of twist Θ between the blades being -10° to -75°. An L kneading disc is an element having a pressure-increasing function that holds up the transported resin and acts on the transported resin in the opposite direction. By providing an element for facilitating kneading on the downstream side, the resin is held up and a strong kneading effect is achieved.

An L screw is also referred to as a backward screw, and generally rotates in the opposite direction from a transporting screw, and is an element having a pressure-increasing function that holds up the transported resin and acts on the transported resin in the opposite direction. By providing an element for facilitating kneading on the downstream side, in the same way as the L kneading disc, the resin is held up and a strong kneading effect is achieved.

The blades mentioned above are generally elliptical, and flattened parts are formed at two elliptical apexes. These blades are also referred to as discs, and the kneading discs are generally constituted from 3 to 7 discs. These discs may, in some cases, have three substantially triangular apexes, and such discs are also referred to as 3-lobe kneading discs. The same is true for R, N and L types. These can be used in the same way. There are also twisted kneading discs in which apexes in kneading discs are twisted in the screw axis direction, and these can achieve a similar kneading effect.

A sealing ring is a ring-shaped element fitted to a screw, blocks approximately 70 to 90% of a flow path, and

retains the flow of the resin, thereby enabling the resin pressure to increase. By providing an element for facilitating kneading on the downstream side, in the same way as the L kneading disc, the resin is blocked and a strong kneading effect can be achieved.

A mixing screw is formed by removing a part of a peak of a screw flight, is a one-lobe or two-lobe screw for forward or reverse transporting, and is an element having a strong shearing and dispersing force. Types of mixing screw include a forward transporting notch type mixing screw and a reverse transporting notch type mixing screw.

A rotor screw is a screw obtained by forming a rotor blade having an elliptical shape (a two-blade structure) or a triangular shape, and a strong shearing force can be applied by a gap between the rotor and the inner wall surface of the barrel (the tip clearance).

The kneading section is formed by combining two or more of the components mentioned above, but is preferably a combination of an R kneading disc, an N kneading disc and an L kneading disc, for example an L configuration in which a plurality of N are provided after one or more R, with RRNNNNNL or the like, as shown in configuration example 1 in Fig. 1, or a configuration in which a forward-feeding screw is disposed after a first kneading section comprising RNNNL and a second kneading section comprising RNL is disposed further downstream, as shown in configuration example 2 in Fig. 1, being particularly preferred.

In the method of the present invention, kneading is carried out at a screw rotation speed of 370 to 830 rpm, and the torque density applied to the screw shaft is 6.0 to 16.0 $Nm/cm^3$.

The torque density applied to the screw shaft is defined as a value ($Nm/cm^3$) determined by dividing the torque (Nm) applied to a connection part at the base of one screw by the cube of the distance (cm) between the two screw shafts. The torque density applied to the screw shaft is related to the amount of energy introduced to the twin screw extruder, and is preferably a high torque density of 6.0 $Nm/cm^3$ to 16.0 $Nm/cm^3$, and by operating at a screw rotation speed of 370 to 830 rpm, good productivity can be stably achieved at a high discharge rate, and it is possible to produce polycarbonate resin composition pellets which have uniform and excellent flame retardancy and which are unlikely to undergo a decrease in impact strength even when the molten resin retains for a long time during molding.

With regard to torque density, the maximum torque (100%) of a TEM41SX by Shibaura Mechatronics Corp., which is used in working examples described below, is 1423 Nm, the distance between screws is 3.4 cm, and the maximum torque density is 18.1 $Nm/cm^3$. The torque density applied to the screw shaft in a test is determined as a value obtained by multiplying the ratio (%) of torque relative to the maximum torque displayed on the instrument panel of the extruder by 18.1 $Nm/cm^3$.

In addition, this torque density can be determined from the power consumption of the motor (W=Nm/sec). That is, the power consumption of the motor (W)=2×π×torque (T)×screw rotation speed (rpm)/60. This torque (T) is the torque (unit: Nm) applied by the motor, and can be determined by dividing this value by 2 to obtain the torque (Nm) applied to one screw shaft, and dividing by the cube of the distance between the shafts.

The meaning of torque density will now be explained slightly more specifically. Extruders having different sizes are designed to be geometrically similar. Furthermore, the maximum torque of the motor is selected so as to be proportional to the cube of the size (typically the barrel diameter) of the extruder. Therefore, if extruders having different sizes have the same screw configuration and the same screw rotation speed and the treatment amount is close to the cube of the size, the torque (Nm) applied per unit volume of resin (that is, torque density: $Nm/cm^3$) is the same. This means that resin inside the extruders is similar in terms of state of filling and state of stress. In other words, even if the extruders have different sizes, if the screw rotation speed and the torque density are the same, the state of kneading will be relatively similar.

In cases when the torque density is low, it is when the resin filling rate in the extruder is low. In cases where torque density is high, the filling factor of the resin is high. If the torque density is low, that is, if the filling factor is low, the residence time inside the extruder is longer, the resin temperature increases, and the resin is easily damaged. Meanwhile, if the torque density is high and the filling factor is high, the residence time inside the extruder is short, the resin temperature is unlikely to increase, unmolten resin is likely to occur, and vent blocking and strand breakage are therefore likely to occur. By setting the torque density to be 6.0 $Nm/cm^3$ to 16.0 $Nm/cm^3$, it is possible to suppress the occurrence of unmolten resin, achieve stable production and reduce resin damage.

A preferred torque density is 7.0 $Nm/cm^3$ to 15.0 $Nm/cm^3$.

In addition, the resin temperature is unlikely to increase if the screw rotation speed is low, and the resin temperature is likely to increase if the screw rotation speed is high. In the method of the present invention, by setting the screw rotation speed to be 370 rpm to 830 rpm, a suitable resin temperature is achieved, the occurrence of unmolten resin is suppressed, production is stable, and damage to the resin can be reduced.

A preferred screw rotation speed is 400 rpm to 800 rpm.

A preferred extruder discharge rate is such that a value obtained by dividing the extruded weight per second Q (g/sec) by the cube of the barrel diameter D (cm) falls within the range 0.70 $g/cm^3 \cdot sec$ to 2.25 $g/cm^3 \cdot sec$. This discharge rate more preferably falls within the range 0.81 $g/cm^3 \cdot sec$ to 2.14 $g/cm^3 \cdot sec$. If the discharge rate is lower than the range mentioned above, the polycarbonate resin and polytetrafluoroethylene are easily damaged, and flame retardancy and

impact strength when the molten resin retains for a long time during molding tend to decrease. If the discharge rate is higher than the range mentioned above, melting of the polycarbonate tends to be insufficient, and vent blocking and strand breakage tend to occur. Because the barrel diameter D of a TEM41SX by Shibaura Mechatronics Corp., which is a typical twin screw extruder, is 4.1 cm, 0.7 $g/cm^3 \cdot sec$ corresponds to a discharge rate of 174 kg/h, and 2.25 $g/cm^3 \cdot sec$ corresponds to a discharge rate of 560 kg/h. In addition, 0.81 $g/cm^3 \cdot sec$ corresponds to a discharge rate of 200 kg/h, and 2.14 $g/cm^3 \cdot sec$ corresponds to a discharge rate of 530 kg/h.

Next, the extruded strand-like molten polycarbonate resin composition is cooled, preferebly in water and cut to form pellets.

The shape of the extruding die is not particularly limited, and a well-known type of die is used. The diameter of the die of the discharge nozzle depends on the extrusion pressure and the desired pellet dimensions, but is generally approximately 2 to 5 mm. The temperature of the polycarbonate resin immediately following extrusion is preferably 260 to 310°C, and more preferably 270 to 305°C.

In the method of the present invention, it is preferable to blend the polycarbonate resin flakes (D), the styrenic copolymer resin (E) and the additive (F) other than the components (B) and (C) in addition to the resin pellets (A), the phosphorus flame retardant (B) and the polytetrafluoroethylene (C). Relative to a total of 100 mass% of components (A) to (F), the blending quantities of these components are 0 to 50 mass% of the polycarbonate resin flakes (D), 0 to 30 mass% of the styrenic copolymer resin (E) and 0 to 15 mass% of the additive (F) other than the components (B) and (C).

These components (B) to (F) can be fed from the feeding port located at the base of the twin screw extruder together with, or separately from, the resin pellets (A). Alternatively these components can be fed into a divided kneading section.

The average particle diameter of the polycarbonate resin flakes (D) is preferably 2 mm or less, and more preferably 1.5 mm or less. By supplying the flaky polycarbonate resin, it is possible to suppress occurrence of unmelted product and aggregation and so on of additives, and uniform polycarbonate resin composition pellets can be readily obtained. The polycarbonate resin in the polycarbonate resin flakes (D) is as described above.

In a case where the polycarbonate resin flakes (D) are used, the blending quantity thereof is preferably 5 to 45 mass%.

The styrenic copolymer resin (E) contains a styrene monomer as an essential component, and examples thereof include resin obtained by polymerizing or copolymerizing copolymerizable monomers, such as acrylonitrile, butadiene and alkyl esters of acrylic acid and methacrylic acid, using polybutadiene, polyisoprene, styrene-butadiene rubbers, acrylic rubbers, and the like, resin compositions obtained by blending these styrenic resin with polybutadiene, polyisobutylene, styrene-propylene-butadiene copolymer rubbers, polystyrene-polybutadiene-polystyrene copolymer rubbers, acrylic acid ester core-shell polymers, and the like, and specifically high impact polystyrene (HIPS), acrylonitrile-styrene resin (AS), methyl methacrylate-styrene resin (MS), acrylonitrile-butadiene-styrene resin (ABS resin), methyl methacrylate-butadiene-styrene resin (MBS resin), styrene-acrylonitrile resin containing elastomers from ethylene-propylene-diene monomers (EPDM-SAN, AES, and the like), styrene-acrylonitrile resin containing acrylic acid ester core-shell polymer, and methyl methacrylate-styrene resin (MAS resin). Of these, high impact polystyrene (HIPS), acrylonitrile-styrene resin (AS resin), methyl methacrylate-butadiene-styrene resin (MBS resin) and acrylonitrile-butadiene-styrene resin (ABS resin) are preferred.

An ABS resin is most preferred as the styrenic copolymer resin (E), but the ABS resin preferably comprises an aromatic vinyl monomer component, a vinyl cyanide monomer component and a diene-containing rubbery polymer component, and is preferably an acrylonitrile-butadiene-styrene copolymer.

The styrenic copolymer resin (E) is preferably fed in the form of pellets from the feeding port located at the base of the twin screw extruder, together with the resin pellet (A). In a case where the styrenic copolymer resin (E) is used, the blending quantity thereof is preferably 5 to 25 mass%.

Preferred examples of the additive (F) other than the phosphorus flame retardant (B) and the polytetrafluoroethylene (C) include a variety of elastomers (impact resistance-improving agents), mold-release agents, stabilizers, fillers, reinforcing agents, other resins, flame retardants other than the phosphorus flame retardant (B), coloring agents (dye and pigment), ultraviolet radiation absorbers, anti-static agents, anti-fogging agents, antiblocking agents, fluidity-improving agents, plasticizers, dispersing agents and antimicrobial agents. In a case where an additive (F) other than component (B) or (C) is used, the blending quantity thereof is preferably 15 mass% or less, more preferably 13 mass% or less, and further preferably 12 mass% or less, such as 11 mass% or less or even 10 mass% or less.

Flame retardant polycarbonate resin composition pellets obtained using the production method of the present invention comprise: 30 to 85 mass%, and preferably 30 to 80 mass%, of a resin derived from the resin pellets (A); not less than 5 mass% and less than 25 mass% of the phosphorus flame retardant (B); 0.1 to 1.0 mass% of the polytetrafluoroethylene (C); 0 to 50 mass% of a polycarbonate resin derived from the polycarbonate resin flakes (D); 0 to 30 mass% of the styrenic copolymer resin (E); and 0 to 15 mass% of the additive (F) other than components (B) and (C) [here, the total amount of components (A) to (E) is 100 mass%].

A method for producing a molded article from the obtained polycarbonate resin composition pellets is not

particularly limited, and it is possible to use a molding method routinely used for polycarbonate resin, that is, an ordinary injection molding method, an ultrahigh speed injection molding method, an injection compression molding method, a multi-color molding method, a gas assisted injection molding method, a molding method involving the use of a heat insulating mold, a molding method involving the use of a rapidly heated and cooled mold, a foam molding method (including using supercritical fluids), an insert molding method, an IMC (in-mold coating) molding method, an extrusion molding method, a sheet molding method, a thermoforming method, a rotational molding method, a lamination molding method or a press molding method.

An obtained molded article can be advantageously used as a component of office automation equipment, such as a printer or copier, electrical equipment, an electronic device, a vehicle such as an automobile, office automation equipment, such as a printer or copier, a house, a building, and the like, and can be used particularly advantageously as a housing for office automation equipment, such as a printer or copier, a computer, a personal computer, a variety of mobile terminals, a battery, and the like.

[Examples]

The present invention will now be explained in greater detail through the use of examples. However, it should be understood that the present invention is not limited to the examples given below.

The screw configuration of an extruder used in examples and comparative examples is as shown in configuration examples 1 and 2 shown in Fig. 1, and the configuration of the kneading section is as follows.

Configuration example 1: RRNNNNNL, overall length 8.0 D Configuration example 2: RNNNL in first kneading section and RNL in second kneading section, overall length 8.0 D

In configuration examples 1 and 2, the number of kneading discs is five and the disc length is 1 D.

The raw materials used in the examples and comparative examples are as shown in Table 1 below.

[Table 1]

| Component | Symbol | |
|---|---|---|
| PC Resin | 7022R | Bisphenol A aromatic polycarbonate resin<br>Novarex 7022R by Mitsubishi Engineering-Plastics, Mv=21500 |
| | 7025R | Bisphenol A aromatic polycarbonate resin<br>Novarex 7025R by Mitsubishi Engineering-Plastics, Mv=24000 |
| | M7027BF | Bisphenol A aromatic polycarbonate resin<br>Novarex M7027BF by Mitsubishi Engineering-Plastics, Mv=26500 |
| | AL071 | Bisphenol A polycarbonate oligomer<br>Iupilon AL071 by Mitsubishi Engineering-Plastics, Mv=5000 |
| | PC116X | Recycled polycarbonate resin<br>PC116X by Ningbo Xuri Hongyu Technology, Mv=22600 |
| Phosphorus flame retardant(B) | B1 | Bisphenol A bis-diphenyl phosphate<br>Adekastab FP-600 by Adeka |
| PTFE (C) | C1 | Polytetrafluoroethylene<br>6-J by Chemours-Mitsui Fluoroproducts Co. |
| PC resin flakes(D) | D1 | S3000F<br>by Mitsubishi Engineering-Plastics, Mv=21500 |
| ABS resin (E) | E1 | ABS resin pellets<br>SXH-330 produced by Nippon A and L Inc. |
| Other additive (F) | F1 | Impact modifier<br>Paraloid EXL-2313 by The Dow Chemical Company |

<Production of polycarbonate resin pellets (adjustment of molecular weight distribution)>

PC-2:

Pellets (hereinafter referred to as "PC-2") were obtained by feeding 47.5 mass% of 7022R, 47.5 mass% of 7025R and 5 mass% of AL071 to a main feeding port at the base of an extruder ("TEM41SX" by Shibaura Machine Co., Ltd.), uniformly compounding at a discharge rate of 300 kg/h, a screw rotation speed of 650 rpm and a preset cylinder temperature of 280°C, extruding a strand, cooling the strand, and then cutting the strand with a pelletizer. The temperature of the strand at this point was 339°C. The takeoff speed of the pelletizer was 37.4 m/min. The average weight of the pellets was 19 mg/pellet. The screw configuration was configuration example 2.

PC-2S:

Pellets "PC-2S" having an average weight of 11 mg/pellet were obtained by extruding a strand using the same method as that used for PC-2 above, with the takeoff speed of the pelletizer being 64.5 m/min.

PC-2L:

Pellets "PC-2L" having an average weight of 37 mg/pellet were obtained by extruding a strand using the same method as that used for PC-2 above, with the takeoff speed of the pelletizer being 19.2 m/min.

PC-3:

Pellets "PC-3" were obtained by compounding using the same method as that used for PC-2 above, except that the amount of 7025R was 90 mass% and the amount of AL071 was 10 mass%. The temperature of the strand was 347°C. The average weight of the pellets was 20 mg/pellet.

PC-5:

Pellets "PC-5" were obtained by compounding using the same method as that used for PC-2 above, except that the amount of M7027BF was 80 mass% and the amount of AL071 was 20 mass%. The temperature of the strand was 355°C. The average weight of the pellets was 20 mg/pellet.

PC-1:

7022R pellets were denoted as "PC-1". The average weight of the pellets was 20 mg/pellet.

PC-4:

Pellets of recycled polycarbonate resin PC116X were denoted as "PC-4". The average weight of the pellets was 20 mg/pellet.

<Measurement of discharge rate per unit time; Q value (unit: $\times 10^{-2}$ $cm^3$/sec)>

Pellets described above were dried for 5 hours at 80°C using a hot air circulation type dryer, a load of 160 kg/$cm^2$ was applied at 280°C using "Flow Tester CFT-500 D" by Shimadzu Corporation, the resin was extruded from a nozzle having a diameter of 1 mm and a length of 10 mm, and the volume of resin flowing per second (unit: $\times 10^{-2}$ $cm^3$/sec) was measured and used as an indicator of fluidity.

<Measurement of molecular weight distribution (Mw/Mn)>

Mw and Mn values of pellets described above were measured in terms of polystyrene using an apparatus and measurement conditions described below, and the Mw/Mn ratio was calculated.

Apparatus: HLC-8320 GPC/EcoSEC (TOSOH)
Column: three Shodex KF-805L (8.0 mm I.D., 300 mm)
Detector: UV-8320
Detection wavelength: 254 nm

Column temperature: 40°C
Flow rate: 1.2 mL/min, injected amount: 200 μL
Eluant: tetrahydrofuran, calibration curve usage: standard polystyrene (using 8 points)
Test solution concentration: 0.3%

The Mw/Mn ratio, Q value (unit: $\times 10^{-2}$ $cm^3$/sec) and average pellet weight (mg/pellet) of polycarbonate resin pellets are shown in Table 2 below.

[Table 2]

| | Mw/Mn | Q value $\times 10^{-2} cm^3$/sec | Average weight (mg/pellet) |
|---|---|---|---|
| PC-1 | 2.5 | 8 | 20 |
| PC-2 | 2.9 | 7.9 | 19 |
| PC-2S | 2.9 | 7.9 | 11 |
| PC-2L | 2.9 | 7.9 | 37 |
| PC-3 | 3.1 | 7.9 | 20 |
| PC-4 | 2.9 | 8 | 20 |
| PC-5 | 3.5 | 8 | 20 |

<Example A1>

Polycarbonate resin pellets (PC-2) at a rate of 135 kg/h (50 mass%), polycarbonate resin flakes (D1) at a rate of 85.59 kg/h (31.7 mass%), impact resistance modifier (F1) at a rate of 16.2 kg/h (6 mass%) and polytetrafluoroethylene (C1) at a rate of 0.81 kg/h (0.3 mass%) were fed from a feeding port at cylinder position C1 to co-rotating twin screw extruder ("TEM41SX" by Shibaura Machine Co.; barrel diameter D: 41 mm; inter-shaft distance: 3.4 cm; maximum torque: 1423 Nm), phosphorus flame retardant (B1) was fed from position C3 at a rate of 32.4 kg/h (12 mass%) using a liquid feeding pump, kneading was carried out using a screw having screw configuration 1, depressurization was then carried out via a vent at position C14, and the mixture was extruded from a discharge port as a strand, which was then cooled in a water bath and cut with a pelletizer to obtain polycarbonate resin composition pellets. The screw rotation speed was 600 rpm, and the preset cylinder temperature was 260°C.

<Flame retardancy evaluation: UL94 test>

Pellets obtained using the method described above were dried for 5 hours at 80°C, and then injection molded at cylinder temperature of 270°C and die temperature of 80°C using injection molding machine, i.e., SE-100DU, by Sumitomo Heavy Industries, to form a UL test piece having a length of 125 mm, a width of 13 mm and a thickness of 0.8 mm. Flame retardancy was evaluated by conditioning the thus obtained UL test piece for 48 hours in a constant temperature chamber at a temperature of 23°C and a humidity of 50% and carrying out a UL94 test specified by the US Underwriters Laboratories (UL) (combustion test for plastic materials for equipment components), and five test pieces were brought into contact with a flame a total of 10 times, and the total burning time was determined.
For flame retardant polycarbonates, the total burning time must be 50 seconds or less. In order to achieve more stable flame retardancy, the total burning time is preferably 40 seconds or less. In order to achieve yet more stable flame retardancy, the total burning time is preferably 30 seconds or less.

<Measurement of retention molding Charpy impact strength>

Production of test piece

After drying the thus obtained pellets for 5 hours at 80°C, an ISO multipurpose test piece having a thickness of 3 mm was subjected to 7-shot molding at a molding cycle of 5 minutes using "SG75MII" injection molding machine by Sumitomo Heavy Industries at cylinder temperature of 300°C and die temperature of 80°C.
In accordance with ISO179-1 and ISO179-2, the notched Charpy impact strength (unit: $kJ/m^2$) of the ISO multipurpose test pieces were measured at 23°C. The average of the seven pieces was taken to be the retention molding Charpy impact strength. In a case where an impact resistant strength improver is added, the retention molding Charpy

impact strength must be 30 kJ/$m^2$ or more, and is preferably 40 kJ/$m^2$ or more. In addition, in a case where an impact resistant strength improver is not added, the retention molding Charpy impact strength must be 8 kJ/$m^2$ or more, and is preferably 9 kJ/$m^2$ or more.

The results are shown in Table 3.

The ratio of torque relative to the maximum torque applied to one screw, which is shown on the instrument panel of the extruder, was 47.5%, and the torque density was 8.6 Nm/$cm^3$. Vent blocking did not occur, strand drawing was stable, and productivity was good. A good total burning time of 32 seconds was achieved, and a good retention molding impact strength of 45 kJ/$m^2$ was also achieved.

<Example A2>

The same procedure as that in Example A1 was carried out, except that the screw rotation speed was 450 rpm.

<Example A3>

The same procedure as that in Example A1 was carried out, except that the screw rotation speed was 750 rpm.

<Example A4>

The same procedure as that in Example A1 was carried out using the same composition as in Example A1, but the feeding rate was increased from 270 kg/h to 450 kg/h.

<Example A5>

The same procedure as that in Example A1 was carried out, except that polycarbonate resin pellets PC-3 were used instead of polycarbonate resin pellets PC-2.

<Example A6>

The same procedure as that in Example A1 was carried out, except that polycarbonate resin pellets PC-4 were used instead of polycarbonate resin pellets PC-2.

<Example A7>

The same procedure as that in Example A1 was carried out, except that polycarbonate resin pellets PC-2S were used instead of polycarbonate resin pellets PC-2.

<Example A8>

The same procedure as that in Example A1 was carried out, except that polycarbonate resin pellets PC-2L were used instead of polycarbonate resin pellets PC-2. A slight degree of vent blocking was observed at the edge of the vent fitting, and the strand broke approximately once every 10 minutes, but this did not prevent production.

<Comparative Example A1>

The same procedure as that in Example A1 was carried out, except that the screw rotation speed was 350 rpm. However, vent blocking occurred, the strand broke frequently, and pellets could not be collected. This is thought to be because the torque density was high, the resin filling factor was high, the screw rotation speed was low and the resin did not melt sufficiently.

<Comparative Example A2>

The same procedure as that in Example A1 was carried out, except that the screw rotation speed was 850 rpm. However, the total burning time was longer than 50 seconds, and flame retardancy was poor. Achieved results were not V-0 in UL94. This is thought to be because the torque density was low, the resin filling factor was low, the screw rotation speed was high, the polytetrafluoroethylene was damaged and flame retardancy was low.

<Comparative Example A3>

The same procedure as that in Example A1 was carried out using the same composition as in Example A1, but the feeding rate was lowered from 270 kg/h to 150 kg/h. However, the total burning time was longer than 50 seconds, and flame retardancy was poor. Achieved results were not V-0 in UL94. This is thought to be because the torque density was low, the resin filling factor was low, the residence time was long, the polytetrafluoroethylene was damaged and flame retardancy was low.

<Comparative Example A4>

The same procedure as that in Example A1 was carried out using the same composition as in Example A1, but the feeding rate was increased from 270 kg/h to 600 kg/h. However, vent blocking occurred, the strand broke frequently, and pellets could not be collected. This is thought to be because the torque density was high, the resin filling factor was high, the residence time was short and the resin did not melt sufficiently.

<Comparative Example A5>

The same procedure as that in Example A1 was carried out, except that polycarbonate resin pellets PC-1 were used instead of polycarbonate resin pellets PC-2.

The total burning time was longer than 50 seconds, and flame retardancy was poor. Achieved results were not V-0 in UL94. This is thought to be because the molecular weight distribution of the polycarbonate resin pellets was narrow, the dripping speed at the time of burning was high and flame retardancy was poor.

<Comparative Example A6>

The same procedure as that in Example A1 was carried out, except that polycarbonate resin pellets PC-5 were used instead of polycarbonate resin pellets PC-2. Flame retardancy was good, but retention molding Charpy impact strength was low. This is thought to be because high molecular weight components in the polycarbonate resin pellets having a wide molecular weight distribution were damaged in a kneading process and the retention molding Charpy impact strength was low.

The results are shown in Tables 3 to 4 below.

In the tables, assessments in the "Combustibility & retention molding impact strength" columns are such that a case where the total burning time was 50 seconds or less and the retention molding Charpy impact strength was 30 $kJ/m^2$ or more was assessed as "A", and cases other than this were assessed as "C".

In addition, productivity evaluations (A, B or C) were assessed on the basis of the criteria below, and are shown in Tables 3 to 4. Moreover, productivity evaluations (A, B or C) in Table 5 onwards were assessed using similar criteria.

A: There was no vent blocking, strand drawing was stable, and productivity was good.
B: There was a slight vent blocking, and the strand 5 broke occasionally but not to the extent that production was not possible.
C: Vent blocking occurred, the strand broke, and pellets could not be collected.

[Table 3]

| | Example | | | | | | | |
|---|---|---|---|---|---|---|---|---|
| | A1 | A2 | A3 | A4 | A5 | A6 | A7 | A8 |
| PC pellets | PC-2 | PC-2 | PC-2 | PC-2 | PC-3 | PC-4 | PC-2S | PC-2L |
| Mw/Mn of PC pellets | 2.9 | 2.9 | 2.9 | 2.9 | 3.2 | 2.9 | 2.9 | 2.9 |
| Screw configuration | 1 | 1 | 1 | 1 | 1 | 1 | 1 | 1 |
| Discharge rate (kg/h) | 270 | 270 | 270 | 450 | 270 | 270 | 270 | 270 |
| Rotational speed of screw (rpm) | 600 | 450 | 750 | 600 | 600 | 600 | 600 | 600 |
| Torque density ($Nm/cm^3$) | 8.6 | 11.2 | 6.6 | 13.8 | 8.7 | 8.6 | 9.0 | 8.5 |

(continued)

| | Example | | | | | | | |
|---|---|---|---|---|---|---|---|---|
| | A1 | A2 | A3 | A4 | A5 | A6 | A7 | A8 |
| Resin temperature | 294 | 285 | 303 | 288 | 297 | 293 | 301 | 279 |
| Vent blocking | No | No | No | No | No | No | No | Slight |
| Strand condition | Good | Good | Good | Good | Good | Good | Good | Ocasionally broke |
| Productivity | A | A | A | A | A | A | A | B |
| Burning time (seconds) | 32 | 33 | 38 | 31 | 31 | 27 | 46 | 41 |
| Retention molding Charpy impact strength (kJ/m$^2$) | 45 | 46 | 42 | 44 | 43 | 51 | 39 | 38 |
| Combustibility & retention molding impact strength | A | A | A | A | A | A | A | A |

[Table 4]

| | Comp. Example | | | | | |
|---|---|---|---|---|---|---|
| | A1 | A2 | A3 | A4 | A5 | A6 |
| PC pellets | PC-2 | PC-2 | PC-2 | PC-2 | PC-1 | PC-5 |
| Mw/Mn of PC pellets | 2.9 | 2.9 | 2.9 | 2.9 | 2.5 | 3.5 |
| Screw configuration | 1 | 1 | 1 | 1 | 1 | 1 |
| Discharge rate (kg/h) | 270 | 270 | 150 | 600 | 270 | 270 |
| Rotational speed of screw (rpm) | 350 | 850 | 600 | 600 | 600 | 600 |
| Torque density (Nm/cm$^3$) | 16.4 | 5.8 | 4.9 | 17.2 | 8.5 | 9.1 |
| Resin temperature | 267 | 311 | 312 | 268 | 290 | 304 |
| Vent blocking | Yes | No | No | Yes | No | No |
| Strand condition | Frequently broke | Good | Good | Frequently broke | Good | Good |
| Productivity | C | A | A | C | A | A |
| Burning time (seconds) | - | 58 | 61 | - | 53 | 31 |
| Retention molding Charpy impact strength (kJ/m$^2$) | 29 | 31 | 30 | 28 | 42 | 28 |
| Combustibility & retention molding impact strength | C | C | C | C | C | C |

<Example A9>

The same procedure as that in Example A1 was carried out, except that the screw configuration was changed to configuration example 2, and phosphorus flame retardant (B1) was fed from position C10 at a rate of 32.4 kg/h (12 mass%) using a liquid feeding pump.

<Comparative Example A7>

The same procedure as that in Comparative Example A1 was carried out, except that the screw configuration was changed to configuration example 2, and phosphorus flame retardant (B1) was fed from position C10 at a rate of 32.4 kg/h (12 mass%) using a liquid feeding pump. However, vent blocking occurred, the strand broke, and pellets could not be collected.

<Comparative Example A8>

The same procedure as that in Comparative Example A2 was carried out, except that the screw configuration was changed to configuration example 2, and phosphorus flame retardant (B1) was fed from position C10 at a rate of 32.4 kg/h (12 mass%) using a liquid feeding pump. However, the total burning time was longer than 50 seconds, and flame retardancy was poor. Achieved results were not V-0 in UL94. This is thought to be because the screw configuration caused significant damage to the polytetrafluoroethylene, and flame retardancy was low.
The results of these evaluations are shown in Table 5 below.

[Table 5]

| | Example | Comp. Example | |
|---|---|---|---|
| | A9 | A7 | A8 |
| PC pellets | PC-2 | PC-2 | PC-2 |
| Mw/Mn of PC pellets | 2.9 | 2.9 | 2.9 |
| Screw configuration | 2 | 2 | 2 |
| Discharge rate (kg/h) | 270 | 270 | 270 |
| Rotational speed of screw (rpm) | 600 | 350 | 850 |
| Torque density ($Nm/cm^3$) | 8.9 | 16.8 | 5.9 |
| Resin temperature | 297 | 269 | 315 |
| Vent blocking | No | Yes | No |
| Strand condition | Good | Frequently broke | Good |
| Productivity | A | C | A |
| Burning time (seconds) | 34 | - | 60 |
| Retention molding Charpy impact strength ($kJ/m^2$) | 44 | 28 | 32 |
| Combustibility & retention molding impact strength | A | C | C |

<Example B1>

Polycarbonate resin pellets (PC-2) at a rate of 224.1 kg/h (83 mass%) and polytetrafluoroethylene (C1) at a rate of 0.81 kg/h (0.3 mass%) were fed from a feeding port at cylinder position C1 to a co-rotating twin screw extruder ("TEM41SX" by Shibaura Machine Co.; barrel diameter D: 41 mm), phosphorus flame retardant (B1) was fed from position C3 at a rate of 45.09 kg/h (16.7 mass%) using a liquid feeding pump and kneaded using screw configuration 1, depressurization was then carried out via a vent, and the mixture was extruded from a discharge port as a strand, which was then cooled in a water bath and cut with a pelletizer to obtain polycarbonate resin composition pellets. The screw rotation speed was 600 rpm, and the preset cylinder temperature was 260°C. The obtained pellets were tested in the same way as in Example A1.
The results are shown in Table 6.
The torque density was 7.9 $Nm/cm^3$, vent blocking did not occur, strand drawing was stable, and productivity was good. A good total burning time of 34 seconds was achieved, and a good retention molding impact strength of 11 $kJ/m^2$, which was at least 8 $kJ/m^2$, was also achieved.

<Example B2>

The same procedure as that in Example B1 was carried out, except that the screw rotation speed was 450 rpm.

<Example B3>

The same procedure as that in Example B1 was carried out, except that the screw rotation speed was 750 rpm.

<Example B4>

The same procedure as that in Example B1 was carried out using the same composition as in Example B1, but the feeding rate was increased from 270 kg/h to 450 kg/h.

<Example B5>

The same procedure as that in Example B1 was carried out, except that polycarbonate resin pellets PC-3 were used instead of polycarbonate resin pellets PC-2.

<Example B6>

The same procedure as that in Example B1 was carried out, except that polycarbonate resin pellets PC-4 were used instead of polycarbonate resin pellets PC-2.

<Example B7>

The same procedure as that in Example B1 was carried out, except that polycarbonate resin pellets PC-2S were used instead of polycarbonate resin pellets PC-2.

<Example B8>

The same procedure as that in Example B1 was carried out, except that polycarbonate resin pellets PC-2L were used instead of polycarbonate resin pellets PC-2. A slight degree of vent blocking was observed at the edge of the vent fitting, and the strand broke approximately once every 8 minutes, but this did not prevent production.

<Comparative Example B1>

The same procedure as that in Example B1 was carried out, except that the screw rotation speed was 350 rpm. However, vent blocking occurred, the strand broke, and pellets could not be collected. This is thought to be because the torque density was high, the resin filling factor was high, the screw rotation speed was low and the resin did not melt sufficiently.

<Comparative Example B2>

The same procedure as that in Example B1 was carried out, except that the screw rotation speed was 850 rpm. However, the total burning time was longer than 50 seconds, and flame retardancy was poor. Achieved results were not V-0 in UL94. This is thought to be because the torque density was low, the resin filling factor was low, the screw rotation speed was high, the polytetrafluoroethylene was damaged and flame retardancy was low.

<Comparative Example B3>

The same procedure as that in Example B1 was carried out using the same composition as in Example B1, but the feeding rate was lowered from 270 kg/h to 150 kg/h. However, the total burning time was longer than 50 seconds, and flame retardancy was poor. Achieved results were not V-0 in UL94.

This is thought to be because the torque density was low, the resin filling factor was low, the residence time was long, the polytetrafluoroethylene was damaged and flame retardancy was low.

<Comparative Example B4>

The same procedure as that in Example B1 was carried out using the same composition as in Example B1, but the feeding rate was increased from 270 kg/h to 600 kg/h.

However, vent blocking occurred, the strand broke, and pellets could not be collected. This is thought to be because the torque density was high, the resin filling factor was high, the residence time was short and the resin did not melt sufficiently.

<Comparative Example B5>

The same procedure as that in Example B1 was carried out, except that polycarbonate resin pellets PC-1 were used instead of polycarbonate resin pellets PC-2.

The total burning time was longer than 50 seconds, and flame retardancy was poor. Achieved results were not V-0 in UL94. This is thought to be because the molecular weight distribution of the polycarbonate resin pellets was narrow, the dripping speed at the time of burning was high and flame retardancy was poor.

<Comparative Example B6>

The same procedure as that in Example B1 was carried out, except that polycarbonate resin pellets PC-5 were used instead of polycarbonate resin pellets PC-2.

Flame retardancy was good, but retention molding Charpy impact strength was low. This is thought to be because high molecular weight components in the polycarbonate resin pellets having a wide molecular weight distribution were damaged in the kneading process and the retention molding Charpy impact strength was low.

The results are shown in Tables 6 to 7 below.

In Tables 6 to 7, assessments in the "Combustibility & retention molding impact strength" columns are such that a case where the turtle burning time was 50 seconds or less and the retention molding impact strength was 8 $kJ/m^2$ or more was assessed as "A", and cases other than this were assessed as "C".

[Table 6]

| | Example | | | | | | | |
|---|---|---|---|---|---|---|---|---|
| | B1 | B2 | B3 | B4 | B5 | B6 | B7 | B8 |
| PC pellets | PC-2 | PC-2 | PC-2 | PC-2 | PC-3 | PC-4 | PC-2S | PC-2L |
| Mw/Mn of PC pellets | 2.9 | 2.9 | 2.9 | 2.9 | 3.2 | 2.9 | 2.9 | 2.9 |
| Screw configuration | 1 | 1 | 1 | 1 | 1 | 1 | 1 | 1 |
| Discharge rate (kg/h) | 270 | 270 | 270 | 450 | 270 | 270 | 270 | 270 |
| Rotational speed of screw (rpm) | 600 | 450 | 750 | 600 | 600 | 600 | 600 | 600 |
| Torque density ($Nm/cm^3$) | 7.9 | 10.4 | 6.2 | 13.0 | 8.1 | 7.8 | 8.3 | 7.9 |
| Resin temperature | 277 | 271 | 289 | 271 | 283 | 279 | 291 | 265 |
| Vent blocking | No | No | No | No | No | No | No | Slight |
| Strand condition | Good | Good | Good | Good | Good | Good | Good | Ocasionally broke |
| Productivity | A | A | A | A | A | A | A | B |
| Burning time (seconds) | 34 | 35 | 39 | 31 | 31 | 26 | 42 | 44 |
| Retention molding Charpy impact strength ($kJ/m^2$) | 11 | 12 | 11 | 11 | 10 | 12 | 9 | 9 |
| Combustibility & retention molding impact strength | A | A | A | A | A | A | A | A |

[Table 7]

| | Comp. Example | | | | | |
|---|---|---|---|---|---|---|
| | B1 | B2 | B3 | B4 | B5 | B6 |
| PC pellets | PC-2 | PC-2 | PC-2 | PC-2 | PC-1 | PC-5 |
| Mw/Mn of PC pellets | 2.9 | 2.9 | 2.9 | 2.9 | 2.5 | 3.5 |
| Screw configuration | 1 | 1 | 1 | 1 | 1 | 1 |
| Discharge rate (kg/h) | 270 | 270 | 150 | 600 | 270 | 270 |

(continued)

| | Comp. Example | | | | | |
|---|---|---|---|---|---|---|
| | B1 | B2 | B3 | B4 | B5 | B6 |
| Rotational speed of screw (rpm) | 350 | 850 | 600 | 600 | 600 | 600 |
| Torque density ($Nm/cm^3$) | 16.2 | 5.7 | 4.4 | 16.5 | 7.8 | 8.2 |
| Resin temperature | 256 | 296 | 297 | 257 | 274 | 289 |
| Vent blocking | Yes | No | No | Yes | No | No |
| Strand condition | Frequently broke | Good | Good | Frequently broke | Good | Good |
| Productivity | C | A | A | C | A | A |
| Burning time (seconds) | - | 54 | 60 | - | 55 | 35 |
| Retention molding Charpy impact strength ($kJ/m^2$) | 7 | 9 | 8 | 7 | 11 | 7 |
| Combustibility & retention molding impact strength | C | C | C | C | C | C |

<Example C1>

Polycarbonate resin pellets (PC-2) at a rate of 162 kg/h (60 mass%), polycarbonate resin flakes (D1) at a rate of 15.39 kg/h (5.7 mass%), ABS resin (E1) at a rate of 40.5 kg/h (15 mass%), impact resistance modifier (F1) at a rate of 10.8 kg/h (4 mass%) and polytetrafluoroethylene (C1) at a rate of 0.81 kg/h (0.3 mass%) were fed from a feeding port at cylinder position C1 to a co-rotating twin screw extruder ("TEM41SX" by Shibaura Machine Co.; barrel diameter D: 41 mm), phosphorus flame retardant (B1) was fed from position C3 at a rate of 40.5 kg/h (15 mass%) using a liquid feeding pump and kneaded using screw configuration 1, depressurization was then carried out via a vent, and the mixture was extruded from a discharge port as a strand, which was then cooled in a water bath and cut with a pelletizer to obtain polycarbonate resin composition pellets. The screw rotation speed was 600 rpm, and the preset cylinder temperature was 260°C. The obtained pellets were tested in the same way as in Example A1.

<Example C2>

The same procedure as that in Example C1 was carried out, except that the screw rotation speed was 450 rpm.

<Example C3>

The same procedure as that in Example C1 was carried out, except that the screw rotation speed was 750 rpm.

<Example C4>

The same procedure as that in Example C1 was carried out using the same composition as in Example C1, but the feeding rate was increased from 270 kg/h to 450 kg/h.

<Example C5>

The same procedure as that in Example C1 was carried out, except that polycarbonate resin pellets PC-3 were used instead of polycarbonate resin pellets PC-2.

<Example C6>

The same procedure as that in Example C1 was carried out, except that polycarbonate resin pellets PC-4 were used instead of polycarbonate resin pellets PC-2.

<Example C7>

The same procedure as that in Example C1 was carried out, except that polycarbonate resin pellets PC-2S were used instead of polycarbonate resin pellets PC-2.

<Example C8>

The same procedure as that in Example C1 was carried out, except that polycarbonate resin pellets PC-2L were used instead of polycarbonate resin pellets PC-2. A slight degree of vent blocking was observed at the edge of the vent fitting, and the strand broke approximately once every 15 minutes, but this did not prevent production.

<Comparative Example C1>

The same procedure as that in Example C1 was carried out, except that the screw rotation speed was 350 rpm. However, vent blocking occurred, the strand broke, and pellets could not be collected. This is thought to be because the torque density was high, the resin filling factor was high, the screw rotation speed was low and the resin did not melt sufficiently.

<Comparative Example C2>

The same procedure as that in Example C1 was carried out, except that the screw rotation speed was 850 rpm. However, the total burning time was longer than 50 seconds, and flame retardancy was poor. Achieved results were not V-0 in UL94. This is thought to be because the torque density was low, the resin filling factor was low, the screw rotation speed was high, the polytetrafluoroethylene was damaged and flame retardancy was low.

<Comparative Example C3>

The same procedure as that in Example C1 was carried out using the same composition as in Example C1, but the feeding rate was lowered from 270 kg/h to 150 kg/h. However, the total burning time was longer than 50 seconds, and flame retardancy was poor. Achieved results were not V-0 in UL94.

This is thought to be because the torque density was low, the resin filling factor was low, the residence time was long, the polytetrafluoroethylene was damaged and flame retardancy was low.

<Comparative Example C4>

The same procedure as that in Example C1 was carried out using the same composition as in Example C1, but the feeding rate was increased from 270 kg/h to 600 kg/h.

However, vent blocking occurred, the strand broke, and pellets could not be collected. This is thought to be because the torque density was high, the resin filling factor was high, the residence time was short and the resin did not melt sufficiently.

<Comparative Example C5>

The same procedure as that in Example C1 was carried out, except that polycarbonate resin pellets PC-1 were used instead of polycarbonate resin pellets PC-2.

The total burning time was longer than 50 seconds, and flame retardancy was poor. Achieved results were not V-0 in UL94. This is thought to be because the molecular weight distribution of the polycarbonate resin pellets was narrow, the dripping speed at the time of burning was high and flame retardancy was poor.

<Comparative Example C6>

The same procedure as that in Example C1 was carried out, except that polycarbonate resin pellets PC-5 were used instead of polycarbonate resin pellets PC-2.

Flame retardancy was good, but retention molding Charpy impact strength was low. This is thought to be because high molecular weight components in the polycarbonate resin pellets having a wide molecular weight distribution were damaged in the kneading process and the retention molding Charpy impact strength was low.

The results are shown in Tables 8 to 9 below.

In Tables 8 to 9, assessments in the "Combustibility & retention molding impact strength" columns are such

that a case where the turtle burning time was 50 seconds or less and the retention molding Charpy impact strength was 30 $kJ/m^2$ or more was assessed as "A", and cases other than this were assessed as "C".

[Table 8]

| | Example | | | | | | | |
|---|---|---|---|---|---|---|---|---|
| | C1 | C2 | C3 | C4 | C5 | C6 | C7 | C8 |
| PC pellets | PC-2 | PC-2 | PC-2 | PC-2 | PC-3 | PC-4 | PC-2S | PC-2L |
| Mw/Mn of PC pellets | 2.9 | 2.9 | 2.9 | 2.9 | 3.2 | 2.9 | 2.9 | 2.9 |
| Discharge rate (kg/h) | 270 | 270 | 270 | 450 | 270 | 270 | 270 | 270 |
| Screw configuration | 1 | 1 | 1 | 1 | 1 | 1 | 1 | 1 |
| Rotational speed of screw (rpm) | 600 | 450 | 750 | 600 | 600 | 600 | 600 | 600 |
| Torque density ($Nm/cm^3$) | 8.1 | 10.5 | 6.2 | 13.3 | 8.2 | 7.9 | 8.4 | 8.0 |
| Resin temperature | 279 | 271 | 291 | 270 | 282 | 281 | 292 | 268 |
| Vent blocking | No | No | No | No | No | No | No | Slight |
| Strand condition | Good | Good | Good | Good | Good | Good | Good | Ocasionally broke |
| Productivity | A | A | A | A | A | A | A | B |
| Burning time (seconds) | 32 | 33 | 38 | 32 | 31 | 27 | 46 | 41 |
| Retention molding Charpy impact strength ($kJ/m^2$) | 45 | 46 | 42 | 44 | 43 | 51 | 39 | 38 |
| Combustibility & retention molding impact strength | A | A | A | A | A | A | A | A |

[Table 9]

| | Comp. Example | | | | | |
|---|---|---|---|---|---|---|
| | C1 | C2 | C3 | C4 | C5 | C6 |
| PC pellets | PC-2 | PC-2 | PC-2 | PC-2 | PC-1 | PC-5 |
| Mw/Mn of PC pellets | 2.9 | 2.9 | 2.9 | 2.9 | 2.5 | 3.5 |
| Discharge rate (kg/h) | 270 | 270 | 150 | 600 | 270 | 270 |
| Screw configuration | 1 | 1 | 1 | 1 | 1 | 1 |
| Rotational speed of screw (rpm) | 350 | 850 | 600 | 600 | 600 | 600 |
| Torque density ($Nm/cm^3$) | 16.3 | 5.8 | 4.5 | 16.7 | 7.9 | 8.3 |
| Resin temperature | 255 | 299 | 298 | 259 | 278 | 290 |
| Vent blocking | Yes | No | No | Yes | No | No |
| Strand condition | Frequently broke | Good | Good | Frequently broke | Good | Good |
| Productivity | C | A | A | C | A | A |
| Burning time (seconds) | - | 58 | 61 | - | 53 | 31 |
| Retention molding Charpy impact strength ($kJ/m^2$) | 28 | 31 | 30 | 29 | 42 | 28 |
| Combustibility & retention molding impact strength | C | C | C | C | C | C |

<Production of polycarbonate resin/ABS resin pellets>

PC/ABS-1:

Pellets (PC/ABS-1) were obtained by feeding 85.7 mass% of 7022R and 14.3 mass% of ABS resin (E1) from the base of TEM41SX, compounding using screw configuration example 2 at a preset cylinder temperature of 280°C, a discharge rate of 300 kg/h and a screw rotation speed of 650 rpm, extruding a strand, cooling the strand and then cutting the strand with a pelletizer. The temperature of the strand at this point was 335°C. The average weight of the pellets was 19 mg/pellet. PC/ABS-2:
Pellets (PC/ABS-2) were obtained by compounding 77.13 mass% of 7025R, 8.57 mass% of AL071 and 14.3 mass% of ABS resin (E1) using a method similar to that used for PC/ABS-1 above. The temperature of the strand was 345°C. The average weight of the pellets was 20 mg/pellet.

PC/ABS-2S:

Pellets (PC/ABS-2S) having average weight of 11 mg/pellet were obtained by extruding a strand using the same method as that described above and then increasing the speed of rotation of the pelletizer.

PC/ABS-2L:

Pellets (PC/ABS-2L) having average weight of 37 mg/pellet were obtained by extruding a strand using the same method as that described above and then lowering the speed of rotation of the pelletizer.

PC/ABS-3:

Pellets (PC/ABS-3) were obtained by compounding 85.7 mass% of PC116X and 14.3 mass% of ABS resin (E1) in a similar manner. The temperature of the strand was 340°C. The average weight of the pellets was 20 mg/pellet.

PC/ABS-4:

Pellets (PC/ABS-4) were obtained by compounding 68.56 mass% of M7027BF, 17.14 mass% of AL071 and 14.3 mass% of ABS resin (E1) in a similar manner. The temperature of the strand was 351°C. The average weight of the pellets was 19 mg/pellet.

The Q values of these PC/ABS pellets were measured. The molecular weight distribution of the polycarbonate resin in the polycarbonate resin/ABS resin pellets was determined by first pulverizing the PC/ABS pellets, dissolving in acetone to remove acrylonitrile components and styrene components, then dissolving in THF to remove butadiene components, extracting THF-soluble components, determining Mw and Mn values from this using the method described above, and then calculating the value of Mw/Mn.

The Mw/Mn Value and Q value of the polycarbonate resin in the PC/ABS pellets and the average weight of the pellets are shown in Table 10 below.

[Table 10]

| | Mw/Mn of PC resin | Q value x$10^{-2}cm^3$/sec | Average weight mg/pellet |
|---|---|---|---|
| PC/ABS-1 | 2.6 | 10.9 | 19 |
| PC/ABS-2 | 3.1 | 11 | 20 |
| PC/ABS-2S | 3.1 | 11 | 11 |
| PC/ABS-2L | 3.1 | 11 | 37 |
| PC/ABS-3 | 3.1 | 10.9 | 20 |
| PC/ABS-4 | 3.5 | 10.9 | 19 |

< Example D1>

PC/ABS resin pellets (PC/ABS-2) at a rate of 189 kg/h (70 mass%), polycarbonate resin flakes (D1) at a rate of 15.39 kg/h (5.7 mass%), ABS resin (E1) at a rate of 13.5 kg/h (5 mass%), impact resistance modifier (F1) at a rate

of 10.8 kg/h (4 mass%) and polytetrafluoroethylene (C1) at a rate of 0.81 kg/h (0.3 mass%) were fed from a feeding port at cylinder position C1 to co-rotating twin screw extruder ("TEM41SX" by Shibaura Machine Co.; barrel diameter D: 41 mm), phosphorus flame retardant (B1) was fed from position C3 at a rate of 40.5 kg/h (15 mass%) using a liquid feeding pump and kneaded using screw configuration 1, depressurization was then carried out via a vent, and the mixture was extruded from a discharge port as a strand, which was then cooled in a water bath and cut with a pelletizer to obtain polycarbonate resin composition pellets. The screw rotation speed was 600 rpm, and the preset cylinder temperature was 260°C. The obtained pellets were tested in the same way as in Example A1.

<Example D2>

The same procedure as that in Example D1 was carried out, except that the screw rotation speed was 450 rpm.

<Example D3>

The same procedure as that in Example D1 was carried out, except that the screw rotation speed was 750 rpm.

<Example D4>

The same procedure as that in Example D1 was carried out using the same composition as in Example D1, but the feeding rate was increased from 270 kg/h to 450 kg/h.

<Example D5>

The same procedure as that in Example D1 was carried out, except that polycarbonate resin pellets PC/ABS-3 were used instead of polycarbonate resin pellets PC/ABS-2.

<Example D6>

The same procedure as that in Example D1 was carried out, except that polycarbonate resin pellets PC/ABS-2S were used instead of polycarbonate resin pellets PC/ABS-2.

<Example D7>

The same procedure as that in Example D1 was carried out, except that polycarbonate resin pellets PC/ABS-2L were used instead of polycarbonate resin pellets PC/ABS-2. A slight degree of vent blocking was observed at the edge of the vent fitting, and the strand broke approximately once every 10 minutes, but this did not prevent production.

<Comparative Example D1>

The same procedure as that in Example D1 was carried out, except that the screw rotation speed was 350 rpm. However, vent blocking occurred, the strand broke, and pellets could not be collected. This is thought to be because the torque density was high, the resin filling factor was high, the screw rotation speed was low and the resin did not melt sufficiently.

<Comparative Example D2>

The same procedure as that in Example D1 was carried out, except that the screw rotation speed was 850 rpm. However, the total burning time was longer than 50 seconds, and flame retardancy was poor. Achieved results were not V-0 in UL94. This is thought to be because the torque density was low, the resin filling factor was low, the screw rotation speed was high, the polytetrafluoroethylene was damaged and flame retardancy was low.

<Comparative Example D3>

The same procedure as that in Example D1 was carried out using the same composition as in Example D1, but the feeding rate was lowered from 270 kg/h to 150 kg/h. However, the total burning time was longer than 50 seconds, and flame retardancy was poor. Achieved results were not V-0 in UL94. This is thought to be because the torque density was low, the resin filling factor was low, the residence time was long, the polytetrafluoroethylene was damaged and flame retardancy was low.

<Comparative Example D4>

The same procedure as that in Example D1 was carried out using the same composition as in Example D1, but the feeding rate was increased from 270 kg/h to 600 kg/h. However, vent blocking occurred, the strand broke, and pellets could not be collected. This is thought to be because the torque density was high, the resin filling factor was high, the residence time was short and the resin did not melt sufficiently.

<Comparative Example D5>

The same procedure as that in Example D1 was carried out, except that polycarbonate resin pellets PC/ABS-1 were used instead of polycarbonate resin pellets PC/ABS-2. The total burning time was longer than 50 seconds, and flame retardancy was poor. Achieved results were not V-0 in UL94. This is thought to be because the molecular weight distribution of the polycarbonate resin pellets was narrow, the dripping speed at the time of burning was high and flame retardancy was poor.

<Comparative Example D6>

The same procedure as that in Example D1 was carried out, except that polycarbonate resin pellets PC/ABS-4 were used instead of polycarbonate resin pellets PC/ABS-2.

Flame retardancy was good, but retention molding Charpy impact strength was low. This is thought to be because high molecular weight components in the polycarbonate resin pellets having a wide molecular weight distribution were damaged in a kneading process and the retention molding Charpy impact strength was low.

The results of these tests are shown in Tables 11 to 12 below.

In Tables 11 to 12, assessments in the "Combustibility & retention molding impact strength" columns are such that a case where the turtle burning time was 50 seconds or less and the retention molding Charpy impact strength was 30 kJ/m$^2$ or more was assessed as "A", and cases other than this were assessed as "C".

[Table 11]

| | Example | | | | | | |
|---|---|---|---|---|---|---|---|
| | D1 | D2 | D3 | D4 | D5 | D6 | D7 |
| PC pellets | PC/ABS -2 | PC/ABS -2 | PC/ABS -2 | PC/ABS -2 | PC/ABS -3 | PC/ABS -2S | PC/ABS -2L |
| Mw/Mn of PC pellets | 3.1 | 3.1 | 3.1 | 3.1 | 3.1 | 3.1 | 3.1 |
| Screw configuration | 1 | 1 | 1 | 1 | 1 | 1 | 1 |
| Discharge rate (kg/h) | 270 | 270 | 270 | 450 | 270 | 270 | 270 |
| Rotational speed of screw (rpm) | 600 | 450 | 750 | 600 | 600 | 600 | 600 |
| Torque density (Nm/cm$^3$) | 8.1 | 10.6 | 6.3 | 13.2 | 7.9 | 8.4 | 8.1 |
| Resin temperature | 278 | 272 | 290 | 270 | 282 | 291 | 269 |
| Vent blocking | No | No | No | No | No | No | Slight |
| Strand condition | Good | Good | Good | Good | Good | Good | Ocasionally broke |
| Productivity | A | A | A | A | A | A | B |
| Burning time (seconds) | 33 | 34 | 36 | 31 | 28 | 47 | 42 |
| Retention molding Charpy impact strength (kJ/m$^2$) | 46 | 45 | 43 | 43 | 50 | 37 | 38 |
| Combustibility & retention molding impact strength | A | A | A | A | A | A | A |

[Table 12]

| | Comp. Example | | | | | |
|---|---|---|---|---|---|---|
| | D1 | D2 | D3 | D4 | D5 | D6 |
| PC pellets | PC/ABS -2 | PC/ABS -2 | PC/ABS -2 | PC/ABS -2 | PC/ABS -1 | PC/ABS -4 |
| Mw/Mn of PC pellets | 3.1 | 3.1 | 3.1 | 3.1 | 2.6 | 3.5 |
| Screw configuration | 1 | 1 | 1 | 1 | 1 | 1 |
| Discharge rate (kg/h) | 270 | 270 | 150 | 600 | 270 | 270 |
| Rotational speed of screw (rpm) | 350 | 850 | 600 | 600 | 600 | 600 |
| Torque density ($Nm/cm^3$) | 16.2 | 5.7 | 4.5 | 16.7 | 7.9 | 8.2 |
| Resin temperature | 256 | 300 | 299 | 258 | 277 | 289 |
| Vent blocking | Yes | No | No | Yes | No | No |
| Strand condition | Frequently broke | Good | Good | Frequently broke | Good | Good |
| Productivity | C | A | A | C | A | A |
| Burning time (seconds) | - | 57 | 62 | - | 54 | 33 |
| Retention molding Charpy impact strength ($kJ/m^2$) | 28 | 32 | 31 | 27 | 41 | 27 |
| Combustibility & retention molding impact strength | C | C | C | C | C | C |

In all of the examples above, it was understood that flame retardancy was good in PC-4 pellets comprising recycled polycarbonate resin (PC116X) and resin composition pellets produced using PC/ABS-3, in which this was used. Recycled resin pellets undergo a great deal of thermal history during molding, pulverizing and re-kneading. Therefore, it is thought that a crosslinked structure develops, dripping is unlikely to occur at the time of burning, and flame retardancy is improved.

[Industrial Applicability]

According to the method of the present invention, it is possible to produce polycarbonate resin composition pellets in which unmelted resin does not occur, vent blocking does not occur, good productivity can be stably achieved at a high discharge rate, uniform and excellent flame retardancy can be achieved, and a decrease in impact strength is unlikely to occur even if the molten resin retains for a long time during molding, and the obtained polycarbonate resin pellets can be widely used in materials for producing components of office automation equipment such as printers and copiers, electrical equipment, electronic devices, vehicles such as automobiles, houses, buildings and other industrial fields, and the present invention therefore exhibits extremely high industrial applicability.

## Claims

**1.** A method for producing flame retardant polycarbonate resin composition pellets using a twin screw extruder, wherein,

from 30 to 85 mass% of resin pellets (A) in which a polycarbonate resin having a Mw/Mn ratio of 2.7 to 3.4 is contained at a quantity of more than 40 mass% in the pellets (A); not less than 5 mass% and less than 25 mass% of a phosphorus flame retardant (B); 0.1 to 1.0 mass% of a polytetrafluoroethylene (C); 0 to 50 mass% of a polycarbonate resin flake (D); 0 to 30 mass% of a styrenic copolymer resin (E); and 0 to 15 mass% of

another additive (F) other than the (B) and (C) [where a total amount of (A) to (F) is 100 mass] are kneaded by the twin screw extruder in a kneading section with a screw configuration consisting of two or more selected from R kneading disc, N kneading disc, L kneading disc, L screw, sealing ring, mixing screw and rotor screw, at a screw rotation speed of 370 to 830 rpm, with the torque density applied to a screw shaft being 6.0 to 16.0 $Nm/cm^3$,
and are extruded as a strand from the extruder and then cut.

**2.** The production method of claim 1, wherein an average weight of the resin pellets (A) is 13 to 35 mg/pellet.

**3.** The production method of claim 1 or 2, wherein a length of the kneading section in the screw configuration is not less than 5 D and not more than 13 D (D is a barrel diameter).

**4.** The production method of any of claims 1 to 3, wherein the resin pellets (A) are recycled resin pellets.

**5.** The production method of any of claims 1 to 4, wherein the phosphorus flame retardant (B) is a condensed phosphate ester compound.

**6.** The production method of any of claims 1 to 5, wherein the phosphorus flame retardant (B) is a condensed phosphate ester compound that is a liquid at room temperature.

**7.** The production method of any of claims 1 to 6, wherein the styrenic copolymer resin (E) is an ABS resin.

[Fig. 1]

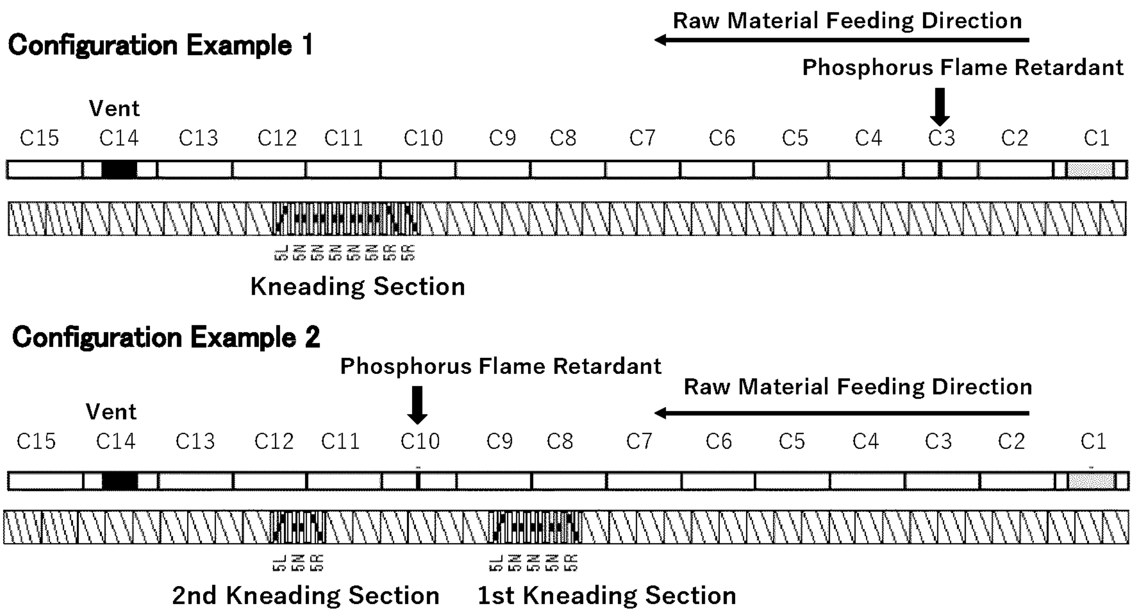
Configuration Example 1
Raw Material Feeding Direction
Phosphorus Flame Retardant
Vent
C15 C14 C13 C12 C11 C10 C9 C8 C7 C6 C5 C4 C3 C2 C1
5L 5N 5N 5N 5N 5N 5R 5R
Kneading Section
Configuration Example 2
Phosphorus Flame Retardant
Raw Material Feeding Direction
Vent
C15 C14 C13 C12 C11 C10 C9 C8 C7 C6 C5 C4 C3 C2 C1
5L 5N 5R
5L 5N 5N 5N 5R
2nd Kneading Section
1st Kneading Section

**INTERNATIONAL SEARCH REPORT**

International application No.
**PCT/JP2022/034299**

**A. CLASSIFICATION OF SUBJECT MATTER**

***B29B 9/06***(2006.01)i; ***B29B 9/12***(2006.01)i; ***C08J 3/12***(2006.01)i; ***C08L 27/18***(2006.01)i; ***C08L 51/04***(2006.01)i; ***C08L 69/00***(2006.01)i; ***B29B 7/48***(2006.01)i; ***B29C 48/40***(2019.01)i; ***B29C 48/505***(2019.01)i
FI: B29B9/12; B29B7/48; B29B9/06; B29C48/40; B29C48/505; C08J3/12 Z; C08L27/18; C08L51/04; C08L69/00

According to International Patent Classification (IPC) or to both national classification and IPC

**B. FIELDS SEARCHED**

Minimum documentation searched (classification system followed by classification symbols)

B29B9/06; B29B9/12; C08J3/12; C08L27/18; C08L51/04; C08L69/00; B29B7/48; B29C48/40; B29C48/505

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2003-73484 A (ASAHI KASEI CORP) 12 March 2003 (2003-03-12) claims, paragraphs [0019]-[0115], fig. 1, 2 | 1-7 |
| Y | JP 2015-129203 A (MITSUBISHI ENG PLASTICS CORP) 16 July 2015 (2015-07-16) claims, paragraphs [0055]-[0108] | 1-7 |
| Y | JP 2000-7907 A (DAICEL CHEM IND LTD) 11 January 2000 (2000-01-11) claims, paragraph [0001] | 1-7 |
| Y | JP 2020-40356 A (MITSUBISHI ENG PLASTICS CORP) 19 March 2020 (2020-03-19) claims | 1-7 |
| Y | JP 2019-210397 A (MITSUBISHI ENG PLASTICS CORP) 12 December 2019 (2019-12-12) claims | 6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 November 2022** | **15 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/034299**

| Patent document cited in search report | Publication date (day/month/year) | Patent family member(s) | Publication date (day/month/year) |
|---|---|---|---|
| JP 2003-73484 A | 12 March 2003 | (Family: none) | |
| JP 2015-129203 A | 16 July 2015 | (Family: none) | |
| JP 2000-7907 A | 11 January 2000 | (Family: none) | |
| JP 2020-40356 A | 19 March 2020 | (Family: none) | |
| JP 2019-210397 A | 12 December 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000198116 A